# EUROPÄISCHE PATENTSCHRIFT

(11) **EP 3 691 503 B1**
(45) Veröffentlichungstag und Bekanntmachung des Hinweises auf die Patenterteilung: **16.09.2020**
(21) Anmeldenummer: 19783621.6
(22) Anmeldetag: 26.08.2019
(51) Int. Cl.: A47J 43/28

(54) **SPATEL FÜR RÜHRSCHÜSSELN**
SPATULUM FOR MIXING BOWLS
SPATULE POUR BOLS MÉLANGEURS

(30) Priorität: 28.08.2018 DE 102018120928
(43) Veröffentlichungstag der Anmeldung: 12.08.2020
(73) Patentinhaber: Wunderle, Johannes, 79341 Kenzingen (DE)
(72) Erfinder: Wunderle, Johannes, 79341 Kenzingen (DE)
(74) Vertreter: Tahhan, Nader Isam Mark
(86) Internationale Anmeldenummer: PCT/IB2019/057153
(87) Internationale Veröffentlichungsnummer: WO 2020/044200

(56) Entgegenhaltungen:
- DE-A1- 1 554 642
- US-A- 5 791 777
- US-A1- 2004 240 313

## Beschreibung

### Einleitung

Die Erfindung betrifft einen Spatel. Insbesondere betrifft die Erfindung einen Spatel für Rührschüsseln aus dem Haushaltsbereich mit durch den Boden durchführbarem Rührwerk.

### Stand der Technik und Nachteile

Zum Vermischen, Zerkleinern oder Emulgieren von Lebensmitteln zwecks Herstellung eines Mischguts wie z.B. eines Teigs, einer Sauce oder Ähnlichem, werden, neben dem manuellen Mischen z.B. mittels eines Kochlöffels oder Schneebesens, häufig elektrisch betriebene Rührmaschinen verwendet, oft vereinfachend auch "Küchenmaschinen" genannt.

Eine derartige Küchenmaschine umfasst unter anderem einen Behälter (Rührschüssel, Mixbecher) und ein Rührwerk, welches rotiert und so die im Behälter befindlichen Zutaten vermischt und/oder zerkleinert. Der Behälter ist während des Mischvorgangs fest in einer Halterung der Küchenmaschine gelagert. Bekannt sind sowohl Küchenmaschinen mit einem von oben in die Schüssel eintauchenden, als auch von unten durch den Behälterboden in die Schüssel hineinreichenden Rühr- oder Häckselwerk, nachfolgend zusammenfassend immer als "Rührwerk" bezeichnet.

Während erstere eine Schüssel mit praktisch vollständig glatten Innenwänden aufweisen können, ist dies bei letzteren konstruktionsbedingt nicht der Fall, da eine Durchführung für das Rührwerk benötigt ist, welche sich typischerweise zentrisch im Boden der Schüssel befindet.

Das Rührwerk selber kann aus Metall ausgeführt sein, und es kann an seinen rotierenden Funktionselementen, den sogenannten Messern, scharfe Kanten aufweisen. Die Anzahl und Positionierung der einzelnen Funktionselemente zueinander kann je nach Funktionsprinzip und Ausführung variieren.

Um ein möglichst vollständiges Erfassen des Mischguts zu erreichen, ist aus der Druckschrift DE 15 54 642 B2 ein Rührwerk bekannt, an welchem ein Abstreiferflügel angebracht ist. Dieser rotiert mit dem rotierenden Funktionselementen mit und ist so ausgestaltet, dass er an der Innenwand der Schüssel entlangstreift. Dabei nimmt er anhaftendes Mischgut mit, welches dann auf den Boden der Schüssel zurückfällt.

Eine vergleichbare Lösung ist aus der Druckschrift US 2004 / 0 240 313 A1 bekannt. Zur Reduzierung der typischerweise sehr hohen Drehzahlen des Rührwerks ist dem Schaber noch ein Planetengetriebe vorgeschaltet. Auch diese Vorrichtung ist zur Verwendung während des Betriebs des Rührwerks vorgesehen.

Nach dem Durchführen des Mischvorgangs kann die Schüssel aus der Halterung der Küchenmaschine entnommen und ausgeleert werden, um das Mischgut zur Weiterverarbeitung oder zum Verzehr in ein anderes Gefäß zu geben. Dabei kann, je nach Konsistenz des Mischguts, ein Teil des Mischguts den Innenwänden und am Boden des Behältnisses haften oder liegen bleiben. Die Verwendung von Löffeln, Kellen oder dergleichen führt ebenfalls zu verhältnismäßig großen Mengen an in der Schüssel verbleibendem Mischgut.

Um das Mischgut möglichst vollständig aus dem Behälter zu entnehmen, können sogenannte Spatel oder Kellen eingesetzt werden.

Spatel für den vorgenannten Zweck sind aus dem Stand der Technik wohlbekannt. Ein solcher Spatel umfasst im Wesentlichen einen Griff und einen Arbeitsteil. Der Arbeitsteil besteht aus einem vornehmlich flachen Element, welches die Form eines Schabers oder Löffels aufweist. Derartige Spatel dienen auch der Reinigung des Mischgefäßes, und können auch zur Entnahme bzw. Hinzugabe von Speisen und/oder zum Rühren verwendet werden. Der Griff kann aus Kunststoff, Holz oder Metall ausgeführt werden. Der Arbeitsteil ist typischerweise aus einem im Vergleich zum Behälter, das aus Glas oder Metall bestehen kann, weicheren Material hergestellt. Dabei kommen Metall, Kunststoffe mit unterschiedliche Härtegraden, Keramik oder Holz zum Einsatz.

Im Falle von besonders flüssigem Mischgut, und wenn der Behälter nicht ausgekippt werden soll, werden bevorzugt sogenannte Kellen eingesetzt, auch Schöpfkellen oder Schöpfer genannt. Kellen der vorgenannten Art sind im Stand der Technik hinreichend beschrieben. Auch sie umfassen aus einen Griffteil und einen Arbeitsteil, der jedoch, im Vergleich zum eher flachen Arbeitsteil eines Spatels, eine bauchige oder halbkugelähnliche Aufnahme aufweist. In dieser, ein Volumen umfassenden Aufnahme lässt sich das Mischgut transportieren.

Die Verwendung von Spateln der beschriebenen Art ist insbesondere im Zusammenhang mit Schüsseln, welche ein am Boden befindliches Rührwerk aufweisen, insofern problematisch, als dass dieses das schabende Führen des Spatels entlang der Bodenfläche behindert. In der Folge verbleibt Mischgut im Bereich des Rührwerks, was unerwünscht ist. Zudem können scharfkantige Teile des Rührwerks den Arbeitsteil des Spatels beschädigen, der, wie erwähnt, bevorzugt aus weichem Material besteht, um sich an die verschiedenen Konturen des Innenbereichs der Schüssel (Seite, Übergang, Boden) anzupassen. Zudem erfordert selbst bei Schüsseln ohne am Boden befindliches Rührwerk der erfolgreiche Einsatz eines Spatels einige Erfahrung in der fortwährenden Anpassung seiner Orientierung zur Innenwand während der gleichzeitig stattfindenden Schabbewegung entlang derselben, da andernfalls immer wieder Streifen von Mischgut im Behälter verbleiben. Insofern hängt das Arbeitsergebnis (Schnelligkeit, Gründlichkeit) bei der Verwendung eines Spatels vom jeweiligen Benutzer ab, was nachteilig ist. Druckschrift DE 10 2014 112 518 A1 schlägt hierfür einen Spatel mit einem fest zwischen Griff und Arbeitsteil angeordnetem Schild vor, dessen Durchmesser nur geringfügig kleiner als der Durchmesser einer Arbeitsöffnung eines Mixgefäßes ist. Somit führt der Schild den Spatel seitlich. Die Verwendung eines Schilds ist jedoch bei handelsüblichen, eine sehr große Arbeitsöffnung aufweisenden Rührschüsseln nicht praktikabel, da der Schild dann ebenfalls sehr groß ausfallen müsste. Zudem löst der vorgeschlagene Spatel nicht das Problem der Entnahme vom im Bereich des Rührwerks anhaftendem Mischgut. Auch versagt der Spatel bei der Entnahme von flüssigem Mischgut.

Für besonders flüssiges Mischgut ist der Spatel kaum anwendbar, da zunächst mit der Spatelkante aufgenommenes und auf die Spatelfläche geschobenes Mischgut schnell wieder vom Spatel herabtropft; nur durch sehr schnelles oder häufig wiederholtes Arbeiten kann ein befriedigendes Arbeitsergebnis erzielt werden. Zwar lässt sich derartiges Mischgut besser mit einer Kelle entnehmen; aufgrund ihrer sperrigen Form verbleibt jedoch umso mehr Mischgut im schlecht zugänglichen Bereich unterhalb des Rührwerks und des Übergangs zwischen Innenwand und Bodenfläche, insbesondere dann, wenn dieser einen sehr kleinen oder sehr großen Radius aufweist. Zudem kann es auch bei einer Kelle zu Beschädigungen durch das, oder an dem, Rührwerk kommen.

Sowohl Spatel als auch Kelle können sich beim Ausführen der komplexen, zur Entnahme des Mischguts erforderlichen Bewegungen, am Rührwerk verklemmen.

Besonders kritisch ist eine Situation, in welcher ein unbeabsichtigter Betrieb der rotierenden Komponenten des Rührwerks auftritt. Zerstörungen sowohl von Spatel bzw. Kelle als auch des Rührwerks sind kaum vermeidbar. Auch kann sich der Benutzer am plötzlich herumgerissenen Griff verletzen. Aber selbst dann, wenn das Rührwerk stillsteht, kann das häufig mit den Fingern praktizierte, manuelle Entfernen von Mischgutresten aus dem schwer zugänglichen Bereich des Rührwerks zu Verletzungen an scharfkantigen Teilen desselben führen.

Um zumindest eine Kollision von Spatel und Rührwerk zu vermeiden, wird in Druckschrift DE 7 902 592 U1 vorgeschlagen, zwischen Arbeitsteil und Griff des Spatels eine bewegliche Scheibe angeordnet, welche größer als die Arbeitsöffnung des Deckels eines Mixgefäßes ist. Mit einem derartigen Spatel ist es jedoch nicht möglich, den Boden des Gefäßes zu erreichen. Zudem versagt auch dieser Spatel bei der Entnahme von flüssigem Mischgut.

### Aufgabe der Erfindung und Lösung

Der Erfindung liegt demnach die Aufgabe zugrunde, eine Vorrichtung und ein Verfahren bereitzustellen, welche bzw. welches die Nachteile des Standes der Technik vermeidet. Demnach soll die erfindungsgemäße Vorrichtung für das wirkungsvolle, also schnelle und möglichst vollständige Entfernen von Mischgut sowohl fester als auch flüssiger Konsistenz aus Rührschüsseln und dergleichen geeignet sein, und insbesondere auch dann, wenn diese ein durch den Boden geführtes Rührwerk aufweisen. Eine Verletzung des Benutzers beim Verwenden der Vorrichtung soll ausgeschlossen werden, ebenso wie eine Beschädigung des Rührwerks, oder ein Verklemmen der Vorrichtung an demselben. Auch die Gefahr bei einem unbeabsichtigten Betrieb des Rührwerks soll verringert sein. Zudem soll die Verwendung der Vorrichtung weitgehend unabhängig von der Erfahrung des Benutzers sein.

Die Aufgabe wird durch eine Entnahmehilfe nach Anspruch 1 sowie ein Verfahren nach nebengeordnetem Anspruch 12 gelöst. Vorteilhafte Ausführungsformen sind den jeweils abhängigen Unteransprüchen, der nachfolgenden Beschreibung sowie den Figuren zu entnehmen.

### Beschreibung

Zunächst wird eine Beschreibung der erfindungsgemäßen Entnahmehilfe gegeben. An diese schließt sich eine Beschreibung des Verwendungsverfahrens derselben an.

Die Entnahmehilfe dient dem Entnehmen flüssigen und festen Mischguts aus einer Rührschüssel für eine Küchenmaschine. Es ist klar, dass die Begriffe "flüssig" und "fest" nicht zu eng zu verstehend sind, also nicht auf wässrige einerseits und harte Stoffe anderseits beschränkt sind. Auch pastöse, teigartiges Mischgut, und aus verschieden viskosen Bestandteilen bestehendes Mischgut ist vorliegend gemeint.

Unter "Küchenmaschine" wird jegliche elektrisch betreibbare Vorrichtung verstanden, welche zur Verarbeitung wie insbesondere dem Mischen, Rühren, Zerkleinern und Emulgieren von Lebensmitteln geeignet ist. Die Rührschüssel umfasst eine nach oben weisende Öffnung, eine Innenwand und einen Boden. In einem Übergangsbereich gehen Innenwand und Boden ineinander über; dieser kann scharfkantig ausgeführt oder mit einem großen Radius versehen sein. Definitionsgemäß kann dieser Übergangsbereich wahlweise der Innenwand oder dem Boden zugeschlagen werden. Der Begriff "Rührschüssel" wird vorliegend weit gefasst und meint jegliches, zur Aufnahme von Mischgut geeignetes Behältnis, also auch Mixbecher, zum Zusammenwirken mit Küchenmaschinen geeignete Töpfe und dergleichen mehr.

In der Rührschüssel befindet sich ein rotierbares Rührwerk, genauer: ein Rührwerk mit rotierbaren Komponenten, welches durch den Boden in den Innenraum der Rührschüssel hineinragt und mindestens ein Funktionselement zum Mischen und/oder Zerkleinern des Mischguts aufweist. Das Funktionselement kann z.B. ein Knethaken, ein Schneebesen oder ein Hackmesser sein. Das Funktionselement reicht immer bis in den zentralen Bereich der Rührschüssel, wo sich die Rotationsachse des Rührwerks befindet. Es erstreckt sich in entgegengesetzter, radialer Richtung in Richtung der Innenwand der Rührschüssel. Vorzugsweise ist es (in einer Draufsicht) nach Art einer "Speiche" ausgebildet, was bedeutet, dass es (in Rotationsrichtung gesehen) einen leeren Bereich vor und hinter dem Funktionselement gibt. Typischerweise existieren mindestens zwei, häufig auch drei oder vier solcher sich radial nach Außen erstreckender Funktionselemente.

Die Entnahmehilfe umfasst ein Griffstück und ein Arbeitsteil. Das Griffstück ist dazu eingerichtet, mit einer Hand des Benutzers gehalten und bedient (rotiert) werden zu können. Es ist vorzugsweise aus einem biegesteifen und haptisch angenehmen Material gefertigt bzw. beschichtet, und besonders bevorzugt spülmaschinenfest. Das Arbeitsteil dient der eigentlichen Aufnahme des zu entnehmenden Mischguts. Die gesamte Entnahmehilfe ist zur Rotation in eine "Arbeitsrichtung" vorgesehen. Diese entspricht vorzugsweise der vorstehend genannten Rotationsrichtung, kann jedoch auch entgegengesetzt derselben verlaufen. Das bedeutet auch, dass sie (in Arbeitsposition) um eine Rotationsachse drehbar ist, welche der Rotationsachse des Rührwerks entspricht.

Erfindungsgemäß ist die Entnahmehilfe dadurch gekennzeichnet, dass das Arbeitsteil eine Zentrierhilfe umfasst, welche zum Zusammenwirken mit einem in Richtung der Öffnung weisenden Ende des Rührwerks, nachfolgend kurz "Rührwerkende" genannt, eingerichtet ist. Die Zentrierhilfe ist demnach so angeordnet, dass die Entnahmehilfe unter Berührung des besagten Endes an diesem ausrichtbar ist. Dabei wird ausgenutzt, dass das Rührwerkende gerade mittig in der Rührschüssel angeordnet ist, und sich daher zur ebenfalls mittigen Anordnung der Entnahmehilfe eignet.

Vorzugsweise fallen in Bedienposition die Rotationsachse des Griffstücks, der Zentrierhilfe, und die Rotationsachse des Rührwerks zusammen.

Erfindungsgemäß weist die Entnahmehilfe außerdem einen konvexen Aufnahmebereich mit einer spatelartigen, in die Arbeitsrichtung weisenden Arbeitskante auf. "Spatelartig" bedeutet, dass die Arbeitskante verhältnismäßig scharf ist, um das mit Spateln mögliche Abheben von Mischgut zu erlauben. Bevorzugt ist die Arbeitskante nach Art einer Schneide ausgebildet, weist also eine besonders scharfe Spitze auf, die sich kontinuierlich verdickt. "Konvex" bedeutet, dass der Aufnahmebereich nicht, wie ein Spatel, im Wesentlichen eben ist, sondern ein Volumen umfasst, welches durch eine Öffnung zugänglich ist. Der "Bauch" des Volumens ist entgegen der Arbeitsrichtung ausgebildet. Das Volumen ist so bemessen, dass eine ausreichende Menge an Mischgut darin aufnehmbar ist; als Richtwert kann der Rauminhalt einer typischen Kelle dienen; er liegt im Bereich einiger 10 bis einiger 100 Milliliter. Zumindest in dem Abschnitt des Aufnahmebereichs, welcher in Richtung des Bodens und/oder der Innenwand weist, befindet sich die Arbeitskante, die den Aufnahmebereich somit in Richtung seiner Öffnung begrenzt.

Im Ergebnis ist die Entnahmehilfe auf besagtem Ende zentrierbar, und, unter Aufnahme von Mischgut, in der Rührschüssel in (und typischerweise auch entgegen der) Arbeitsrichtung rotierbar.

Die Erfindung vermeidet somit die aus dem Stand der Technik bekannten Nachteile.

Aufgrund der erfindungsgemäßen Kombination aus spatelartiger Arbeitskante und kellenartigem Aufnahmebereich kann sowohl festes Mischgut wirkungsvoll von der Innenseite der Rührschüssel abgehoben, als auch flüssiges Mischgut aufgenommen und im Aufnahmebereich gehalten werden. Die Formgebung des Arbeitsteils erlaubt die Verwendung in Rührschüsseln auch mit durch den Boden geführtem Rührwerk, da das Arbeitsteil zwischen seinen Funktionselementen platziert werden kann. Eine Verletzung des Benutzers beim Verwenden der Vorrichtung wird ausgeschlossen, da die Entnahmehilfe zum einen auch in die Bereiche unterhalb der Funktionselemente gelangt, so dass sich ein manuelles Reinigen dieser Bereiche mit den Fingern erübrigt, und zum anderen mittels der Zentrierhilfe exakt so platziert werden kann, dass sie nicht mit dem Rührwerk kollidiert. Aus demselben Grund wird auch eine Beschädigung des Rührwerks oder ein Verklemmen der Entnahmehilfe an demselben vermieden. Für dem Fall, dass sich das Rührwerk unbeabsichtigt in Bewegung setzt, wird sich zwar die Entnahmehilfe mitdrehen; da die Hand des Benutzers jedoch lediglich das bevorzugt rotationssymmetrische Griffstück berührt, kann sich dieses in der Hand drehen, ohne sofort zu einer Verletzung zu führen. Die Verwendung der erfindungsgemäßen Entnahmehilfe ist auch weitgehend unabhängig von der Erfahrung des Benutzers, da sie auf einfache Weise korrekt positioniert werden kann, und zum korrekten Einsatz lediglich rotiert werden muss, ohne gleichzeitig in verschiedene Richtungen gekippt werden zu müssen.

Nachfolgend werden verschiedene Ausführungsformen der Erfindung näher beschrieben.

Nach einer bevorzugten Ausführungsform weist die Arbeitskante eine der Kontur des Bodens und/oder der Innenwand entsprechende Form auf. Besonders bevorzugt entspricht die Form sowohl der Kontur des Bodens als auch der Innenwand. Im Falle eines im wesentlichen flachen, senkrecht zur Rotationsachse des Rührwerks ausgerichteten Bodens verläuft die Arbeitskante in diesem Bereich parallel zu dessen Ebene, und besonders bevorzugt kollinear mit ihr, d.h., die Arbeitskante liegt in derselben Ebene wie der Boden. Gleiches gilt für die Innenwand, sowie für einen ggf. vorhandenen Übergangsbereich. Auch für den Fall, dass Boden und Innenwand zusammen einen stark abgerundeten, sogar kreissegmentartigen Querschnitt aufweisen, ist die Arbeitskante in den Abschnitten, in welchen sie an der Innenseite der Rührschüssel anliegt, dementsprechend geformt.

Auf diese Weise wird die besonders hohe Abhebeleistung erbracht, da aufgrund der Konturidentität praktisch kein Mischgut unter dem Arbeitsbereich hindurch rutschen kann.

Nach einer weiteren bevorzugten Ausführungsform weist auch der Aufnahmebereich in seinem zum Boden und/oder zur Innenwand weisenden Abschnitt eine der Kontur des Bodens oder der Innenwand entsprechende Form auf; besonders bevorzugt gilt dies wieder für beide Abschnitte. Ist der Boden beispielsweise eben, so liegt der entsprechende Abschnitt des Aufnahmebereichs parallel dazu, und besonders bevorzugt koplanar mit diesem. Gleiches gilt für die Innenwand; die Ausführungen im vorigen Absatz gelten in analoger Weise auch für den Aufnahmebereich.

Durch die flächige "Verlängerung" der Kontur der Arbeitskante in den Aufnahmebereich hinein wird die Abnahmeleistung weiter verbessert; zudem wird das Volumen des Aufnahmebereichs weiter vergrößert.

Nach einer weiteren Ausführungsform weist die Zentrierhilfe einen hohlen Endbereich mit einem Innendurchmesser auf, welcher an den Außendurchmesser des Rührwerkendes, das definitionsgemäß oberhalb der Funktionselemente beginnt, angepasst ist. Typischerweise weist das nach oben weisende Ende eines am Boden einer Rührschüssel sitzenden Rührwerks ein rundes Endstück auf, oder ein Endstück, welches eine runde Umhüllende besitzt oder in einer solchen Platz findet. Dies trifft z.B. auch für die Form einer Sechskantmutter zu. Auf dieses "Endstück", also das Rührwerkende, kann die Zentrierhilfe aufgesetzt oder aufgesteckt werden, wenn ihr Innendurchmesser den Außendurchmesser des Endes (bzw. seiner Umhüllenden) geringfügig übersteigt.

Nach einer anderen Ausführungsform ist das Rührwerkende demnach nicht rund ausgestaltet, und der hohle Endbereich ist der Form des Rührwerkendes derart angepasst, dass er trotz der nichtrunden Form auf das Rührwerkende aufsteckbar ist. In beiden Fällen dient also das Ende des Rührwerks als Aufnahme für den Endbereich der Zentrierhilfe.

Besonders bevorzugt weist der Endbereich dann eine Tiefe auf, welche die Länge des Rührwerkendes übersteigt. Somit kann das Rührwerkende vollständig vom Endbereich aufgenommen werden. Die radial abstehenden Funktionselemente dienen dann als Auflage für die Spitze der Zentrierhilfe, wodurch die vertikale Position eindeutig festgelegt ist.

Ist die Tiefe geringer als die Länge des Endes des Rührwerks, kann die Spitze des Rührwerkendes als Auflage im Inneren des hohlen Endbereichs dienen, um so ebenfalls die vertikale Position eindeutig festzulegen.

Nach einer weiteren bevorzugten Ausführungsform der Zentrierhilfe weist diese wiederum besagten hohlen Endbereich auf, wobei derselbe zumindest in einem Endabschnitt einen seitlich offenen, zum Aufschieben auf das Rührwerkende eingerichteten, beispielsweise halbkreisförmigen Querschnitt hat. Das bedeutet, dass der Querschnitt in einer Ansicht von Unten in etwa halbkreisförmig ist. Dies ermöglich ein seitliches Aufschieben der Zentrierhilfe auf das Rührwerkende. Auch, wenn das Rührwerkende eine andere als eine runde Form aufweist, kann ein Endabschnitt der vorstehend genannten Art auf besagtes Rührwerkende aufschiebbar sein.

Nach einer Ausführungsform erstreckt sich die seitlich offene Aussparung zum Ende des hohlen Endbereiches. Der Endabschnitt hat dann die gleiche Tiefe wie der gesamte hohle Endbereich.

Nach einer anderen Ausführungsform erstreckt sich der Endabschnitt mit der seitlich offenen Aussparung nicht bis zum Ende des hohlen Endbereiches, sondern mindestens so weit, wie das Rührwerkende lang ist (s. obenstehende Definition). Das bedeutet, dass das Rührwerkende vollständig vom Endabschnitt umfasst werden kann.

Besonders bevorzugt entspricht der entlang der Rotationsachse, in Arbeitsposition der Entnahmehilfe gemessene Abstand zwischen Spitze der Zentrierhilfe und Unterseite des Arbeitsteils in etwa der Höhe des Rührwerks über dem Boden der Rührschüssel, abzüglich der Länge des Rührwerkendes. Das bedeutet, dass, wenn die Entnahmehilfe in Arbeitsposition ist, diese mit ihrer Spitze gerade oberhalb der Funktionselemente auf diesen aufliegt, und zugleich die Unterseite des Arbeitsteils auf dem Boden der Rührschüssel aufliegt. Auf diese Weise sind zwei Auflagen geschaffen, die die vertikale Position der Entnahmehilfe weiter stabilisieren und außerdem einem unerwünschtem Verkippen derselben vorbeugen.

Es ist außerdem klar, dass die zum Fuß des Rührwerks weisende Seite des Arbeitsteils derart geformt ist, dass sie mit diesem nicht kollidiert; andernfalls wäre ein korrektes Positionieren der Entnahmehilfe nicht möglich. Bevorzugt entsprechen sich die Außenkontur des Fußes und die in diese Richtung weisende Seite des Arbeitsteils in etwa, um das Volumen des Arbeitsteils zu maximieren und/oder eine zusätzliche Führung entlang der Außenseite des Fußes bereitzustellen.

Nach einer anderen Ausführungsform weist die Entnahmehilfe mindestens einen Mitnehmer zur rotierenden Bewegung des mindestens einen Funktionselements auf. Das bedeutet, dass beim manuellen Rotieren der Entnahmehilfe die rotierbaren Teile des Rührwerks selbsttätig mitgeschoben werden. Dies ist zwar grundsätzlich mit jeder Form der Arbeitskante des Arbeitsteils möglich, da diese immer irgendwann und irgendwo an die Rückseite eines Funktionselements anstößt; bevorzugt ist es jedoch, wenn hierfür ein dedizierter Mitnehmer vorgesehen ist, der insbesondere dafür sorgt, dass weder die empfindliche Arbeitskante noch eine empfindliche Stelle des Funktionselements berührt werden.

Bevorzugt ist der Mitnehmer zur Berührung einer entgegen der Arbeitsrichtung weisenden Kante des Funktionselements, oder zum Zusammenwirken mit dem Ende des Rührwerks eingerichtet. Besagte Kante ist im Normalfall nicht scharf und daher unbedenklich berührbar. Besagtes Ende kann eine nicht-runde Form aufweisen, an die der Endbereich der Zentrierhilfe derart angepasst ist, dass ein formschlüssiges Zusammenwirken ermöglicht ist.

Bei einer Rührschüssel mit einem mindestens zwei Funktionselemente aufweisenden Rührwerk ist es vorteilhaft, wenn die entgegen der Arbeitsrichtung liegende Rückwand des Aufnahmebereichs bis zum nachfolgenden Funktionselement reicht. Somit ist der Raum zwischen zwei Funktionselementen bestmöglich ausgenutzt, und das Arbeitsteil der Entnahmehilfe kann eine größtmögliche Menge an Mischgut aufnehmen. Bei zwei Funktionselementen weist das Arbeitsteil in etwa die Form eines Halbkreissegments auf, bei drei Funktionselementen weist das Arbeitsteil die Form eines Drittelkreissegments, und bei vier Funktionselementen die Form eines Viertelkreissegments.

Vorzugsweise weicht in einer Arbeitsposition die Arbeitskante nicht mehr als 1 mm ± 2 mm von der Kontur der Rührschüssel ab. Anders ausgedrückt, die Arbeitskante passt sich entweder exakt an die Kontur der Rührschüssel an, oder es ist ein kleiner Spalt vorgesehen, oder es existiert ein leichtes Übermaß, was zu einer Verformung der vorzugsweise elastisch ausgestalteten Arbeitskante führt, so dass diese im Betrieb mit etwas Reibung über die Innenseite der Rührschüssel gleitet.

Im Bereich des Fußes des Rührwerks kann der Abstand auch größer ausfallen.

Wie erwähnt, ist zumindest die Arbeitskante vorzugsweise aus einem elastischen Material gefertigt. Auch das gesamte Arbeitsteil kann aus einem solchen Material gefertigt sein; das Griffstück ist vorzugsweise aus einem biegesteifen Material hergestellt.

Das Arbeitsteil kann vom Griffstück abnehmbar ausgestaltet sein, um gegen ein anders geformtes Arbeitsteil ausgetauscht werden zu können. Dies kann beim Vorliegen unterschiedlich festen Mischguts, oder beim Wechsel der Rührschüssel, beispielsweise zu einem Mixbecher, oder zum Reinigen, oder zum Austausch aufgrund Verschleißes oder Beschädigung vorteilhaft sein.

Nachfolgend wird nunmehr die Verwendung der Entnahmehilfe nach vorstehender Definition beschrieben.

Zunächst erfolgt ein Einbringen der Entnahmehilfe in die Öffnung der Rührschüssel, typischerweise senkrecht von oben, aber auch aus einer leicht seitlichen Richtung. Dies kann vorteilhaft sein, wenn das Rührwerk an einer oberhalb der Rührschüssel angeordneten Brücke befestigt ist.

Alsdann erfolgt ein Positionieren der Entnahmehilfe derart, dass ihr Arbeitsteil zwischen aufeinanderfolgenden Funktionselementen des Rührwerks liegt. Das bedeutet, dass das Arbeitsteil in den Zwischenraum zwischen den Funktionselementen eingebracht wird.

Dann wird die Zentrierhilfe der Entnahmehilfe mit dem in Richtung der Öffnung weisenden Rührwerkende zusammengeführt, die Teile also in unmittelbare Nähe zueinander gebracht.

Nun wird die Entnahmehilfe derart ausgerichtet, dass die Rotationsachse des Griffstücks und die Rotationsachse des Rührwerks zusammenfallen. Dies kann sowohl durch Stecken von oben als auch Aufschieben von der Seite her geschehen, abhängig von der Ausgestaltung des Endbereichs der Zentrierhilfe (s.o.). Die Entnahmehilfe ist nunmehr in Arbeitsposition.

Schließlich erfolgt ein Rotieren der Entnahmehilfe mittels Drehens des Griffstücks um die Rotationsachse des Rührwerks, so dass die Arbeitskante entlang des Bodens und/oder der Innenwand der Rührschüssel geführt wird. Somit wird Mischgut mittels der spatelartigen Arbeitskante abgeschabt, und von nachfolgend abgeschabtem Mischgut in den konvexen Aufnahmebereich geschoben. Wenn das Mischgut vollständig entfernt ist, oder wenn der Arbeitsbereich aufgefüllt ist, wird die Entnahmehilfe in umgekehrter Reihenfolge aus der Rührschüssel entnommen und geleert/gereinigt, bevor sie ggf. wieder erneut in Arbeitsposition gebracht wird.

Die beschriebene Arbeitsweise ist einfach und unkompliziert und kann von jedem Benutzer mit gutem Arbeitsergebnis schnell und sicher, sowie ohne Erfahrung durchgeführt werden. Sowohl flüssiges als auch festes Mischgut kann entnommen werden, ohne dass ein Kippen der Rührschüssel zwingend nötig wäre. Die Gefahr der Verletzung des Benutzers wie auch der Beschädigung der Entnahmehilfe oder des Rührwerks ist gering. Zur Vermeidung von Wiederholungen wird auf die vorstehenden Erläuterungen zur Entnahmehilfe verwiesen.

Besonders bevorzugt erfolgt mittels eines Mitnehmers gemäß obenstehender Definition auch ein fortwährendes Mitrotieren der rotierbaren Komponenten des Rührwerks unter Vermeidung einer Berührung zwischen Arbeitskante und vorausgehendem Funktionselement. Somit muss das Rührwerk nicht manuell berührt werden, während in einem Arbeitsgang die gesamte, umlaufende Innenseite der Rührschüssel von Mischgut befreit werden kann. Ggf. sind auch mehrere Umläufe ohne manuelles Berühren des Rührwerks durch den Benutzers möglich.

Nach einer weiteren Ausführungsform erfolgt auch ein Rotieren der Entnahmehilfe entgegen der Arbeitsrichtung. Dies kann dem Anhäufen des Mischguts, und zur anschließenden Entnahme unter Rotation in die Arbeitsrichtung dienen. Ein Rotieren entgegen der Arbeitsrichtung kann auch, wenn die Rührschüssel gekippt wird, hilfreich sein, da der Arbeitsbereich dazu genutzt werden kann, um die Entleerung der Rührschüssel zu unterstützen.

### Figurenbeschreibung

Nachfolgend wird die Erfindung anhand von Figuren beispielhaft erläutert. Dabei zeigt
**Figur 1** eine bevorzugte Ausführungsform einer erfindungsgemäßen Entnahmehilfe mit Blick von vorn;
**Figur 2** die Ausführungsform aus Fig. 1 mit Blick von hinten;
**Figur 3** eine Aufsicht auf eine in einer Rührschüssel in Arbeitsposition befindlichen Entnahmehilfe;
**Figur 4** die Situation aus Fig. 3 in einer Schnittansicht;
**Figur 5 und 6** verschiedene Situationen bei einer schrägen Herausnahme der Entnahmehilfe;
**Figur 7 bis 9** verschiedene Situationen bei der Verwendung der Entnahmehilfe.

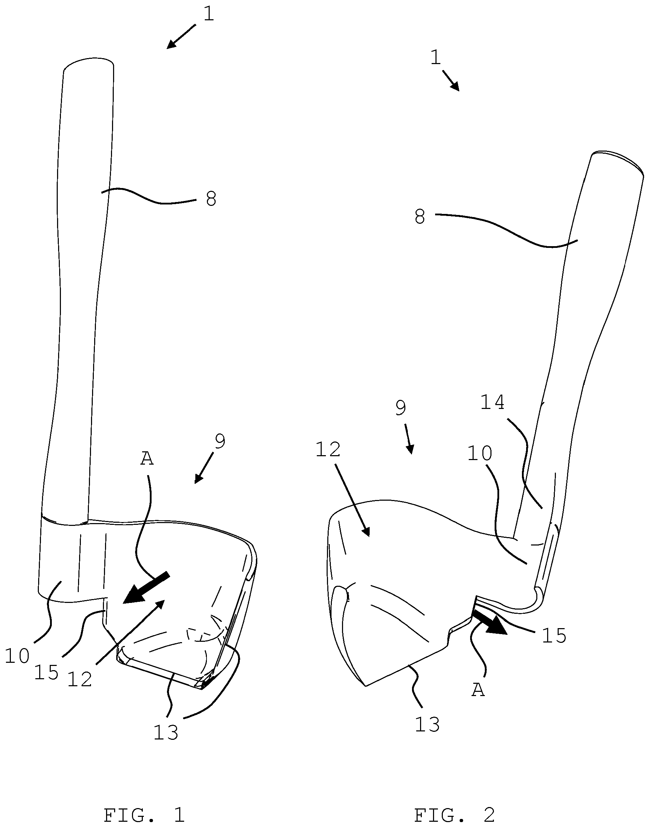

In der **Figur 1** ist eine bevorzugte Ausführungsform einer erfindungsgemäßen Entnahmehilfe mit Blick von vorn gezeigt; **Figur 2** zeigt die Ausführungsform aus Fig. 1 mit Blick von hinten.

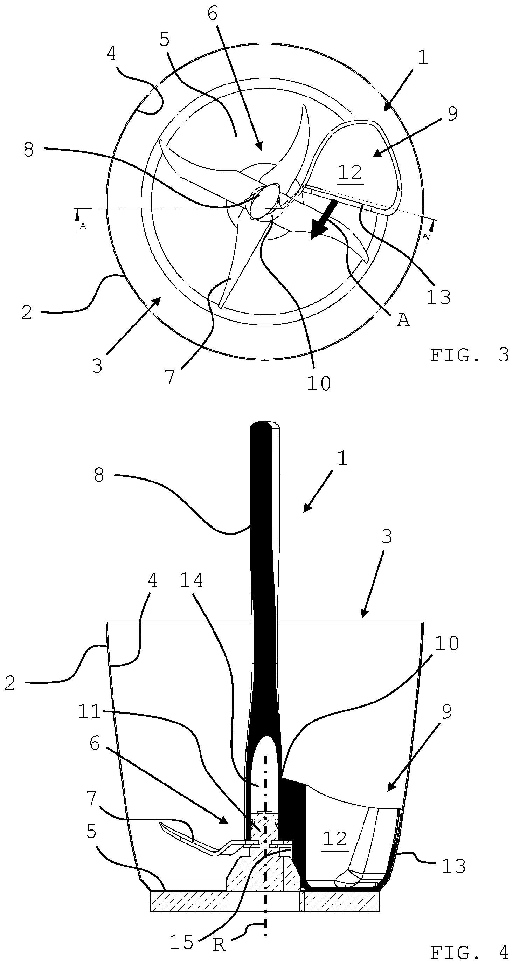

Die Entnahmehilfe 1 umfasst ein Griffstück 8 und ein Arbeitsteil 9. Das Arbeitsteil 9 umfasst eine Zentrierhilfe 10, welche zum Zusammenwirken mit einem in Richtung der Öffnung 3 einer Rührschüssel 2 weisenden Rührwerkende 11 eines Rührwerks 6 eingerichtet ist (jeweils nicht dargestellt). Das Arbeitsteil 9 weist ferner einen konvexen Aufnahmebereich 12 mit einer spatelartigen, in eine Arbeitsrichtung A weisende Arbeitskante 13 auf. Diese erstreckt sich an der Vorderkante der Unterseite und der nach außen weisenden Kante der Außenseite des Arbeitsteils 9. In der **Figur 3** ist eine Aufsicht auf eine in einer Rührschüssel in Arbeitsposition befindlichen Entnahmehilfe gezeigt, und in **Figur 4** die Situation aus Fig. 3 in einer Schnittansicht.

Die Rührschüssel 2 umfasst eine Öffnung 3, eine Innenwand 4, einen Boden 5, sowie ein rotierbares Rührwerk 6, welches durch den Boden 5 in den Innenraum der Rührschüssel 2 hineinragt und vier Funktionselemente 7 (nur eines mit Bezugszeichen versehen) zum Mischen und/oder Zerkleinern des Mischguts M (nicht dargestellt) aufweist.

Erkennbar ist auch, dass die Zentrierhilfe 10 zum Zusammenwirken mit dem in Richtung der Öffnung 3 weisenden Rührwerkende 11 des Rührwerks 6 eingerichtet ist. Wie ersichtlich, ist die Entnahmehilfe 1 auf besagtem Rührwerkende 11 zentrierbar und in der Rührschüssel 2 in (und auch entgegen der) Arbeitsrichtung A rotierbar. Erkennbar ist ferner, dass die Arbeitskante 13 eine der Kontur des Bodens 5 und der Innenwand 4 entsprechende Form aufweist, wobei dies selbstverständlich nur für die Abschnitte der Rührschüssel 2 gilt, in welchen auch eine Entnahme mittels der Entnahmehilfe 1 erfolgen soll. Da sich Mischgut M (nicht gezeigt) zumeist insbesondere im unteren Bereich der Rührschüssel 2 ansammelt, und außerdem gerade dieser Bereich anderweitig wegen des dort angeordneten Rührwerks 6 schwer zugänglich ist, ist es sinnvoll, das Arbeitsteil 9 wie gezeigt so zu gestalten, das es gerade aus diesem unteren Bereich Mischgut M entnehmen kann.

Erkennbar ist zudem, dass auch der Aufnahmebereich 12 in seinem zum Boden 5 und zur Innenwand 4 weisenden Abschnitt eine der Kontur des Bodens 5 und der Innenwand 4 entsprechende Form aufweist. Somit ist das Volumen des Aufnahmebereichs 12 maximiert.

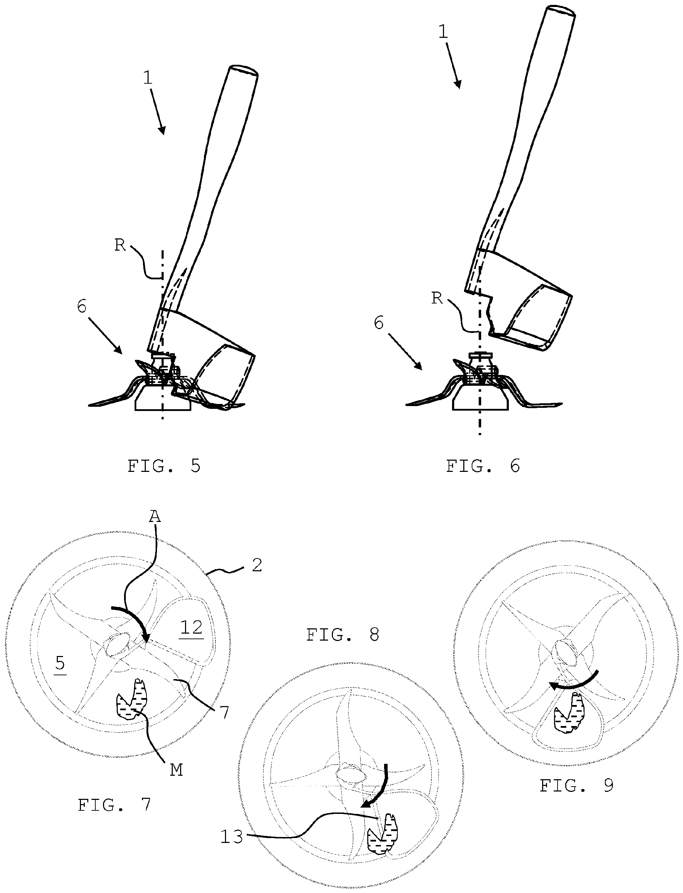

Die Zentrierhilfe 10 weist einen hohlen Endbereich 14 mit einem Innendurchmesser auf, welcher an den Außendurchmesser des Rührwerkendes 11 angepasst ist. Somit kann die Zentrierhilfe 10 auf besagtes Rührwerkende 11 aufgesteckt werden. Vorliegend weist der Endbereich 14 der Zentrierhilfe 10 eine Tiefe auf, welche die Länge des Rührwerkendes 11 übersteigt. Das Rührwerkende 11 ist somit vollständig vom Endbereich 14 aufnehmbar. Vorliegend weist der hohle Endbereich 14 einen Endabschnitt auf, welcher einen seitlich offenen, zum Aufschieben auf das Rührwerkende 11 eingerichteten Querschnitt aufweist. In der gezeigten Ausführungsform ist der Querschnitt in etwa halbkreisförmig. Somit ist die Zentrierhilfe 10 auch seitlich auf das Rührwerkende 11 aufschiebbar, oder, wie in den **Figuren 5 und 6** dargestellt, abkippbar. Dies ermöglicht ein schräges Aufsetzen und Entfernen der Entnahmehilfe 1 vom Rührwerk 6; Rotationsachse R des Rührwerks 6 und Rotationsachse der Entnahmehilfe stehen dann in einem Winkel zueinander.

Wie in **Figur 4** außerdem erkennbar, entspricht der entlang der Rotationsachse R gemessene Abstand zwischen Spitze der Zentrierhilfe 10 und Unterseite des Arbeitsteils 9 gerade der Höhe des Rührwerks 6 über dem Boden 5 über dem Boden der Rührschüssel 2 abzüglich der Länge des Rührwerkendes 11. Somit liegt die Entnahmehilfe 1 in der dargestellten Arbeitsposition mit der im Bild nach unten weisenden Spitze der Zentrierhilfe 10 gerade oberhalb des Funktionselements 7 auf. Zugleich liegt die Unterseite des Arbeitsteils 9 auf dem Boden 5 der Rührschüssel 2 auf.

Die Entnahmehilfe 1 weist einen Mitnehmer 15 zur rotierenden Bewegung des Funktionselements 7 auf. Vorliegend ist der Mitnehmer 15 durch eine an geeigneter Stelle des Arbeitsteils 9 vorgesehene Körperkante bereitgestellt. Der Mitnehmer 15 ist demnach zur Berührung einer entgegen der Arbeitsrichtung A weisenden Kante des Funktionselements 7 eingerichtet.

In Figur 3 ist auch erkennbar, dass die entgegen der Arbeitsrichtung A liegende Rückwand des Aufnahmebereichs 12 bis zum nachfolgenden Funktionselement 7 reicht. Somit ist der zur Verfügung stehende Raum zwischen aufeinander folgenden Funktionselementen 7 optimal ausgenutzt.

In den **Figuren 7 bis 9** sind verschiedene Situationen bei der Verwendung der Entnahmehilfe gezeigt. Aus Gründen der Übersichtlichkeit sind die Bezugszeichen weitgehend weggelassen.

In **Fig. 7** befindet sich das Mischgut M zwischen zwei Funktionselementen 7 auf dem Boden 5 der Rührschüssel 2. Durch manuelle Rotation der Entnahmehilfe 1 in Richtung des Pfeils (Arbeitsrichtung A) bewegt sich der Aufnahmebereich 12 in Richtung des Mischguts M. Gleichzeitig bewegt der Mitnehmer 15 die rotierbaren Teile des Rührwerks 6 mit. In **Fig. 8** schiebt sich die Arbeitskante 13 bereits unter das Mischgut M, und fördert dieses somit in den Aufnahmebereich 12 hinein. Durch weitere Rotation gelangt das Mischgut M schließlich vollständig in den Aufnahmebereich 12 (**Fig. 9**). Nunmehr kann die Entnahmehilfe 1, beispielsweise wie in Fig. 5 und 6 gezeigt, aus der Rührschüssel 2 entfernt, und das Mischgut M aus dem Aufnahmebereich 12 entnommen werden.

### Bezugszeichenliste

- 1: Entnahmehilfe
- 2: Rührschüssel
- 3: Öffnung
- 4: Innenwand
- 5: Boden
- 6: Rührwerk
- 7: Funktionselement
- 8: Griffstück
- 9: Arbeitsteil
- 10: Zentrierhilfe
- 11: Rührwerkende
- 12: Aufnahmebereich
- 13: Arbeitskante
- 14: Endbereich
- 15: Mitnehmer

- M: Mischgut
- R: Rotationsachse
- A: Arbeitsrichtung

## Patentansprüche

1. Entnahmehilfe (1) zum Entnehmen flüssigen und festen Mischguts (M) aus einer Rührschüssel (2) für eine Küchenmaschine, die Rührschüssel (2) umfassend eine Öffnung (3), eine Innenwand (4), einen Boden (5), sowie ein rotierbares Rührwerk (6), welches durch den Boden (5) in den Innenraum der Rührschüssel (2) hineinragt und mindestens ein Funktionselement (7) zum Mischen und/oder Zerkleinern des Mischguts (M) aufweist, wobei die Entnahmehilfe (1) ein Griffstück (8) und ein Arbeitsteil (9) umfasst und zur Rotation in eine Arbeitsrichtung (A) vorgesehen ist, **dadurch gekennzeichnet, dass** das Arbeitsteil (9)
- eine Zentrierhilfe (10) umfasst, welche zum Zusammenwirken mit einem in Richtung der Öffnung (3) weisenden Rührwerkende (11) des Rührwerks (6) eingerichtet ist, und
- einen konvexen Aufnahmebereich (12) mit einer spatelartigen, in die Arbeitsrichtung (A) weisende Arbeitskante (13) aufweist,
so dass die Entnahmehilfe (1) auf besagtem Rührwerkende (11) zentrierbar und in der Rührschüssel (2) in Arbeitsrichtung (A) rotierbar ist.

2. Entnahmehilfe (1) nach Anspruch 1, wobei die Arbeitskante (13) eine der Kontur des Bodens (5) und/oder der Innenwand (4) entsprechende Form aufweist.

3. Entnahmehilfe (1) nach Anspruch 1 oder 2, wobei der Aufnahmebereich (12) in seinem zum Boden (5) und/oder zur Innenwand (4) weisenden Abschnitt eine der Kontur des Bodens (5) oder der Innenwand (4) entsprechende Form aufweist.

4. Entnahmehilfe (1) nach einem der Ansprüche 1 bis 3, wobei die Zentrierhilfe (10) einen hohlen Endbereich (14) mit einem Innendurchmesser aufweist, welcher an den Außendurchmesser des Rührwerkendes (11) angepasst ist.

5. Entnahmehilfe (1) nach Anspruch 4, wobei der Endbereich (14) der Zentrierhilfe (10) eine Tiefe aufweist, welche die Länge des Rührwerkendes (11) übersteigt.

6. Entnahmehilfe (1) nach einem der vorhergehenden Ansprüche, wobei die Zentrierhilfe (10) einen hohlen Endbereich (14) aufweist, der zumindest in einem Endabschnitt einen seitlich offenen, zum Aufschieben auf das Rührwerkende (11) eingerichteten Querschnitt aufweist.

7. Entnahmehilfe nach einem der vorhergehenden Ansprüche, wobei der entlang der Rotationsachse (R) gemessene Abstand zwischen Spitze der Zentrierhilfe (10) und Unterseite des Arbeitsteils (9) der Höhe des Rührwerks (6) über dem Boden (5) abzüglich der Länge des Rührwerkendes (11) entspricht.

8. Entnahmehilfe (1) nach einem der vorhergehenden Ansprüche, wobei dieselbe mindestens einen Mitnehmer (15) zur rotierenden Bewegung des mindestens einen Funktionselements (7) aufweist, und wobei der Mitnehmer (15) zur Berührung einer entgegen der Arbeitsrichtung (A) weisenden Kante des Funktionselements (7), oder zum Zusammenwirken mit dem Rührwerkende (11) eingerichtet ist.

9. Entnahmehilfe (1) nach einem der vorhergehenden Ansprüche für eine Rührschüssel (2) mit einem mindestens zwei Funktionselemente (7) aufweisenden Rührwerk (6), wobei eine entgegen der Arbeitsrichtung (A) liegende Rückwand des Aufnahmebereichs (12) bis zum nachfolgenden Funktionselement (7) reicht.

10. Entnahmehilfe (1) nach einem der vorhergehenden Ansprüche, wobei in einer Arbeitsposition die Arbeitskante (13) nicht mehr als 1 mm ± 2 mm von der Kontur der Rührschüssel (2) abweicht.

11. Entnahmehilfe (1) nach einem der vorhergehenden Ansprüche, wobei zumindest die Arbeitskante (13) aus einem elastischen Material gefertigt ist.

12. Verwendung einer Entnahmehilfe (1) nach einem der vorhergehenden Ansprüche, umfassend die folgenden Schritte:
- Einbringen der Entnahmehilfe (1) in die Öffnung (3) der Rührschüssel (2);
- Positionieren der Entnahmehilfe (1) derart, dass ihr Arbeitsteil (9) zwischen aufeinanderfolgenden Funktionselementen (7) des Rührwerks (6) liegt;
- Zusammenführen von Zentrierhilfe (10) der Entnahmehilfe (1) mit dem in Richtung der Öffnung (3) weisenden Rührwerkende (11);
- Ausrichten der Entnahmehilfe (1) derart, dass Rotationsachse des Griffstücks und Rotationsachse (R) des Rührwerks (6) zusammenfallen;
- Rotieren der Entnahmehilfe (1) mittels Drehens des Griffstücks (8) um die Rotationsachse des Rührwerks, so dass die Arbeitskante (13) entlang des Bodens (5) und/oder der Innenwand (4) der Rührschüssel (2) geführt wird, so dass Mischgut (M) mittels der spatelartigen Arbeitskante (13) abgeschabt und von nachfolgend abgeschabtem Mischgut (M) in den konvexen Aufnahmebereich (12) geschoben wird.

13. Verwendung nach Anspruch 12, wobei mittels eines Mitnehmers (15) gemäß Definition in Anspruch 8 ein fortwährendes Mitrotieren der rotierbaren Komponenten des Rührwerks (6) unter Vermeidung einer Berührung von Arbeitskante (13) mit vorausgehendem Funktionselement (7) erfolgt.

## Claims

1. Removal aid (1) for removal of liquid and solid mix (M) from a stirring bowl (2) for a food processor, the stirring bowl (2) comprising an opening (3), an inner wall (4), a bottom (5), as well as a rotatable stirring unit (6) which reaches into the interior of the stirring bowl (2) through the bottom (5) and which has at least one functional element (7) for mixing and/or crushing the mix, wherein the removal aid (1) comprises a handle (8) and a work element (9) and is intended for a rotation in a working direction (A), **characterized in that** the working element (9)
- has a centering aid (10) which is designed to cooperate with a stirring unit's end (11) of the stirring unit (6), said end (11) pointing towards the opening (3), and
- has a convex reception region (12) with a spatula-like working edge (13) that points towards the working direction (A),
so that the removal aid (1) can be centred onto said stirring unit's end (11) and can be rotated in working direction (A) inside the stirring bowl (1).

2. Removal aid (1) according to claim 1, wherein the working edge (13) has a shape corresponding to the contour of the bottom (5) and/or the inner wall (4).

3. Removal aid (1) according to claim 1 or 2, wherein the reception region (12) has, in its section pointing towards the bottom (5) and/or the inner wall (4), a shape corresponding to the contour of the bottom (5) and/or the inner wall (4).

4. Removal aid (1) according to any of claims 1 to 3, wherein the centering aid (10) has a hollow end region (14) with an inner diameter which is adjusted to the outer diameter of the stirring unit's end (11).

5. Removal aid (1) according to claim 4, wherein the end region (14) of the centering aid (10) has a depth which exceeds the length of the stirring unit's end (11).

6. Removal aid (1) according to any of the preceding claims, wherein the centering aid (10) has a hollow end region (14) which provides at least at an end section a laterally open cross section which is designed for pushing the centering aid (10) onto the stirring unit's end (11).

7. Removal aid (1) according to any of the preceding claims, wherein the distance between tip of the centering aid (10) and underside of the work element (9), measured along the rotation axis (R), corresponds to the height of the stirring unit (6) above the bottom, subtracted by the length of the stirring unit's end (11).

8. Removal aid (1) according to any of the preceding claims, wherein the same comprises at least one catch (15) for rotating movement of the at least one functional element (7), and wherein the catch (15) is designed to contact an edge of the functional element (7) which is oriented against the working direction (A), or to cooperate with the stirring unit's end (11) .

9. Removal aid (1) according to any of the preceding claims for a stirring bowl (2) with a stirring unit (6) having at least two functional elements (7), wherein a rear wall of the reception region (12) which is positioned contrary to the working direction (A) stretches up to the subsequent functional element (7).

10. Removal aid (1) according to any of the preceding claims, wherein in a working position, the working edge (13) deviates no more that 1 mm ± 2 mm from the contour of the stirring bowl (2) .

11. Removal aid (1) according to any of the preceding claims, wherein at least the working edge (13) is made from an elastic material.

12. Use of a removal aid (1) according to any of the preceding claims, comprising the following steps:
- Introduce the removal aid (1) into the opening (3) of the stirring bowl (2);
- Positioning the removal aid (1) in a way such that its work element (9) is positioned between subsequent functional elements (7) of the stirring unit (6);
- Bringing together centering aid (10) of the removal aid (1) with the stirring unit's end (11) that points towards the opening (3);
- Aligning the removal aid (1) in a way such that rotation axis of the handle and rotation axis (R) of the stirring unit (6) coincide;
- Rotating the removal aid (1) by turning the handle (8) around the rotation axis of the stirring unit, such that the working edge (13) is guided along the bottom (5) and/or the inner wall (4) of the stirring bowl (2), so that mix (M) is scraped off by means of the spatula-like working edge (13), and shoved into the convex reception region (12) by subsequent mix (M).

13. Use according to claim 12, wherein by means of a catch (15) according to definition in claim 8, a continuous co-rotating of the rotatable components of the stirring unit (6) occurs, while avoiding contact between working edge (13) and preceding functional element (7).

## Revendications

1. Auxiliaire d'extraction (1) destiné à l'extraction de mélange liquide et solide (M) hors d'un bol mélangeur (2) pour un robot culinaire, le bol mélangeur (2) comprenant une ouverture (3), une paroi interne (4), un fond (5), ainsi qu'un ustensile mélangeur rotatif (6), lequel fait saillie dans l'espace intérieur du bol mélangeur (2) à travers le fond (5) et comporte au moins un élément fonctionnel (7) destiné à mélanger et/ou à broyer le mélange (M), dans lequel l'auxiliaire d'extraction (1) comprend un élément de préhension (8) et un élément de travail (9) et est prévu pour la rotation dans une direction de travail (A), **caractérisé en ce que** l'élément de travail (9)
- comprend un auxiliaire de centrage (10), lequel est configuré pour coopérer avec une extrémité d'ustensile (11) de l'ustensile mélangeur (6) dirigée dans la direction de l'ouverture (3), et
- comporte une zone de réception convexe (12) dotée d'un bord de travail (13) de type spatule dirigé dans la direction de travail (A),
de sorte que l'auxiliaire d'extraction (1) peut être centré sur ladite extrémité d'ustensile mélangeur (11) et est rotatif dans la direction de travail (A) dans le bol mélangeur (2).

2. Auxiliaire d'extraction (1) selon la revendication 1, dans lequel le bord de travail (13) présente une forme correspondant au contour du fond (5) et/ou de la paroi interne (4).

3. Auxiliaire d'extraction (1) selon la revendication 1 ou 2, dans lequel la zone de réception (12) présente dans sa partie dirigée vers le fond (5) et/ou vers la paroi interne (4) une forme correspondant au contour du fond (5) ou de la paroi interne (4).

4. Auxiliaire d'extraction (1) selon l'une des revendications 1 à 3, dans lequel l'auxiliaire de centrage (10) comporte une zone d'extrémité creuse (14) dotée d'un diamètre intérieur adapté au diamètre extérieur de l'extrémité d'ustensile mélangeur (11).

5. Auxiliaire d'extraction (1) selon la revendication 4, dans lequel la zone d'extrémité (14) de l'auxiliaire de centrage (10) présente une profondeur qui dépasse la longueur de l'extrémité d'ustensile mélangeur (11).

6. Auxiliaire d'extraction (1) selon l'une des revendications précédentes, dans lequel l'auxiliaire de centrage (10) comporte une zone d'extrémité creuse (14), laquelle présente au moins dans une partie d'extrémité une section transversale configurée pour l'enfilage sur l'extrémité d'ustensile mélangeur (11).

7. Auxiliaire d'extraction (1) selon l'une des revendications précédentes, dans lequel la distance mesurée le long de l'axe de rotation (R) entre la pointe de l'auxiliaire de centrage (10) et la face inférieure de l'élément de travail (9) correspond à la hauteur de l'ustensile mélangeur (6) au-dessus du fond (5) moins la longueur de l'extrémité d'ustensile mélangeur (11).

8. Auxiliaire d'extraction (1) selon l'une des revendications précédentes, dans lequel celui-ci comporte au moins un entraîneur (15) permettant le mouvement rotatif de l'au moins un élément fonctionnel (7), et dans lequel l'entraîneur (15) est configuré pour entrer en contact avec un bord de l'élément fonctionnel (7) dirigé à l'opposé de la direction de travail (A), ou pour coopérer avec l'extrémité d'ustensile mélangeur (11).

9. Auxiliaire d'extraction (1) selon l'une des revendications précédentes pour un bol mélangeur (2) doté d'un ustensile mélangeur (6) comportant au moins deux éléments fonctionnels (7), dans lequel une paroi arrière de la zone de réception (12) située à l'opposé de la direction de travail (A) s'étend jusqu'à l'élément fonctionnel (7) suivant.

10. Auxiliaire d'extraction (1) selon l'une des revendications précédentes, dans lequel dans une position de travail le bord de travail (13) ne diffère pas de plus de 1 mm ± 2 mm du contour du bol mélangeur (2).

11. Auxiliaire d'extraction (1) selon l'une des revendications précédentes, dans lequel au moins le bord de travail (13) est fabriqué d'un matériau élastique.

12. Utilisation d'un auxiliaire d'extraction (1) selon l'une des revendications précédentes, comprenant les étapes suivantes :
- introduction de l'auxiliaire d'extraction (1) dans l'ouverture (3) du bol mélangeur (2) ;
- positionnement de l'auxiliaire d'extraction (1) de telle sorte que son élément de travail (9) se trouve entre deux éléments fonctionnels (7) consécutifs de l'ustensile mélangeur (6) ;
- réunion de l'auxiliaire de centrage (10) de l'auxiliaire d'extraction (1) avec l'extrémité d'ustensile mélangeur (11) dirigée dans la direction de l'ouverture (3) ;
- alignement de l'auxiliaire d'extraction (1) de telle sorte que l'axe de rotation de l'élément de préhension et l'axe de rotation (R) de l'ustensile mélangeur (6) coïncident ;
- rotation de l'auxiliaire d'extraction (1) en faisant tourner l'élément de préhension (8) autour de l'axe de rotation de l'ustensile mélangeur, de sorte que le bord de travail (13) est guidé le long du fond (5) et/ou de la paroi interne (4) du bol mélangeur (2), de sorte que le mélange (M) est raclé au moyen du bord de travail (13) de type spatule et est poussé dans la zone de réception (12) convexe par le mélange (M) consécutivement raclé.

13. Utilisation selon la revendication 12, dans lequel au moyen d'un entraîneur (15) conforme à la définition dans la revendication 8 une rotation conjointe continue des composants rotatifs du malaxeur (6) s'effectue en évitant un contact du bord de travail (13) avec l'élément fonctionnel (7) précédent.
